Europäisches Patentamt

European Patent Office

Office européen des brevets

(11) Veröffentlichungsnummer: **0 149 218**
**B1**

(12) **EUROPÄISCHE PATENTSCHRIFT**

(45) Veröffentlichungstag der Patentschrift: **19.09.90**

(21) Anmeldenummer: **84116149.0**

(22) Anmeldetag: **21.12.84**

(51) Int. Cl.⁵: **H 04 M 3/24, H 04 M 19/00, H 04 Q 3/60, H 04 Q 11/04**

(54) Schaltungsanordnung zur Überwachung und Sicherstellung des ordnungsgemässen Betriebs einer Teilnehmeranschlussbaugruppe eines digitalen Zeitmultiplex-Fernsprechvermittlungssystems.

(30) Priorität: **16.01.84 DE 3401288**

(43) Veröffentlichungstag der Anmeldung:
**24.07.85 Patentblatt 85/30**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
**DE-A-3 215 680**
**DE-B-2 524 322**

**PATENT ABSTRACTS OF JAPAN, Band 7, Nr.**
**132 (E-180)1277r, 9. Juni 1983; & JP-A-58 47 361**
**(NAKAYO TSUUSHINKI K.K.) 19-03-1983**

(73) Patentinhaber: **Siemens Aktiengesellschaft**
**Wittelsbacherplatz 2**
**D-8000 München 2 (DE)**

(72) Erfinder: **Kopetzky, Horst**
**Lannerstrasse 11**
**D-8025 Unterhaching (DE)**

EP 0 149 218 B1

Courier Press, Leamington Spa, England.

## Beschreibung

Die Erfindung betrifft eine Schaltungsanordnung zur Überwachung und Sicherstellung des ordnungsgemäßen Betriebs einer Teilnehmeranschlußbaugruppe eines digitalen Zeitmultiplex-Fernsprechvermittlungssystems, die u.a. einen allen Teilnehmerschaltungen der Baugruppe gemeinsamen Steuerrechner umfaßt, und die insbesondere Bestandteil eines digitalen Konzentrators des Zeitmultiplex-Fernsprechvermittlungssystems ist.

Teilnehmeranschlußbaugruppen der obengenannten Art umfassen eine Anzahl von teilnehmerindividuellen Teilnehmerschaltungen. Wesentliche Funktionen dieser Teilnehmerschaltungen sind die Teilnehmerspeisung, der Überspannungsschutz, die Rufanschaltung, die Signalisierung, sofern es sich um Anschlußschaltungen für Analogteilnehmer handelt die Analog-Digitalwandlung bzw.Digital-Analog-Wandlung, ferner die Zweidraht/Vierdrahtumsetzung, die Prüfungund schließlich die Schleifenüberwachung.

Solche Teilnehmeranschlußschaltungen weisen demnach ein Speisenetzwerk auf, das vorzugsweise aus Widerständen einer Schichtschaltung gebildet ist, die zum Teil durch Kontakte überbrückbar sind. Diese Kontakte werden durch zwei voneinander unabhängige Relais betätigt.

Über einen relaisbetätigten Kontakt erfolgt auch die Rufstromeinspeisung. Als Indikationsschaltung werden Operationsverstärker eingesetzt, deren Eingangsspannung mittels Spannungsteiler, die ebenfalls Bestandteil der erwähnten Schichtschaltung sind, an den Adern der Teilnehmeranschlußleitung abgenommen werden.

Insbesondere sofern die Teilnehmeranschlußbaugruppe Bestandteil eines digitalen Konzentrators ist, sind Untergruppen (COSLAC) gebildet, die die zur Durchführung der übrigen der genannten Funktionen dienenden Bestandteile enthalten, also unter anderem einen Analog-Digital-Wandler und Digital-Analog-Wandler samt zugehöriger Filter, die Gabelschaltung, Relaistreiber, Schaltmittel zur Pegeleinstellung und zur Durchführung von Testfunktionen, sowie diverse Schnittstellenschaltungen.

Zum ordnungsgemäßen Betrieb einer derartigen Teilnehmeranschlußbaugruppe gehört es, daß nicht eines der beiden zum Speisenetzwerk gehörenden Relais zusammen mit dem Rufeinspeiserelais anspricht, da sonst eine Zerstörung der Schichtschaltung zu befürchten wäre. Dieser Fehler ist insbesondere dann zu befürchten, wenn die Betriebsspannung der Anschlußbaugruppe unter einem vorgegebenen Wert absinkt, bzw. bevor die Betriebspannung beim Einschalten ihren vorgegebenen Wert erreicht, was wegen der Vielzahl der verwendeten Abblockkondensatoren mit einer relativ großen Zeitkonstante geschieht.

Es ist ferner sicherzustellen, daß der Steuerrechner mit der Abwicklung seines Programms erst dann beginnt bzw. in den Anfangszustand zurückgestellt wird, wenn die Betriebsspannung einen bestimmten Grenzwert erreicht hat.

Ferner muß vermieden werden, daß sich sowohl Hardwarefehler als auch Programm Fehler des Steuerrechners auf den übrigen Teil der Vermittlungsstelle insbesondere in Form, gestörter Weitergabe von Sprachinformationen auswirken bzw. es muß dafür gesorgt werden, daß im Falle eines solchen Fehlers der Programmablauf von neuem gestartet wird. Ein solcher Neubeginn des Programms kann auch zur Folge haben, daß übertragungstechnische Koeffizienten, die in der erwähnten Unterbaugruppe COSLAC gespeichert sind, und die beispielsweise die Kombination der Betätigungen der erwähnten Relais betreffen, erneut und richtig eingespeichert werden.

Der Erfindung liegt nun die Aufgabe zugrunde, eine Schaltungsanordnung anzugeben, die die Teilnehmeranschlußbaugruppe auf das Auftreten der erwähnten Fehler bzw. der Ursachen solcher Fehler überwacht und sicherstellt, daß solche Fehler nicht zu Beschädigungen von Bestandteilen der Teilnehmeranschlußgruppe führen und sich nicht in größerem Umfang auf die Vermittlungsstelle auswirken, zu dem die Teilnehmeranschlußbaugruppe gehört.

Diese Aufgabe wird mit einer Schaltungsanordnung der eingangs genannten Art gelöst, die erfindungsgemäß gekennzeichnet ist durch eine retriggerbare monostabile Kippstufe, die durch ein vom Steuerrechner bei ordnungsgemäßem Betrieb abgegebenes periodisches Signal getriggert wird, sofern nicht ein bei nichteingehaltenem vorgegebenem Pegel der Versorgungsspannung für aktive Bauteile der Teilnehmeranschlußbaugruppe auftretendes Unterbrechungssignal vorliegt, und deren bei Rückkehr in den stabilen Zustand abgegebenes eines Ausgangssignal dazu herangezogen wird, jeweils zum Zeitpunkt des Auftretens eines periodischen Taktsignals ein Rücksetzen des Steuerrechners, ein Sperren der Übertragungswege für Sprachsignale zwischen Teilnehmeranschlußbaugruppe und Vermittlungsstelle, sowie ein Abtrennen der Betriebsspannung für zur Teilnehmeranschlußschaltung gehörende Relais zu bewirken.

Nachstehend wird die Erfindung anhand eines Ausführungsbeispiels unter Bezugnahme auf eine Zeichnung näher erläutert.

In der Zeichnung zeigen:

Fig. 1 in schematischer Darstellung die Gliederung einer digitalen Zeitmultiplex-Fernsprechvermittlungsstelle, bei der Teilnehmerstationen über einen digitalen Konzentrator angeschlossen sind.

Fig. 2 einen solchen digitalen Konzentrator, der eine Mehrzahl von zu überwachenden Teilnehmeranschlußbaugruppen enthält.

Fig. 3 eine mehr in einzelne gehende Darstellung einer solchen Teilnehmeranschlußbaugruppe zusammen mit dem Steuerrechner und der schematischen Darstellung der erfindungsgemäßen Überwachungsschaltung.

Fig. 4 die detaillierte Darstellung der Überwachungsschaltung selbst.

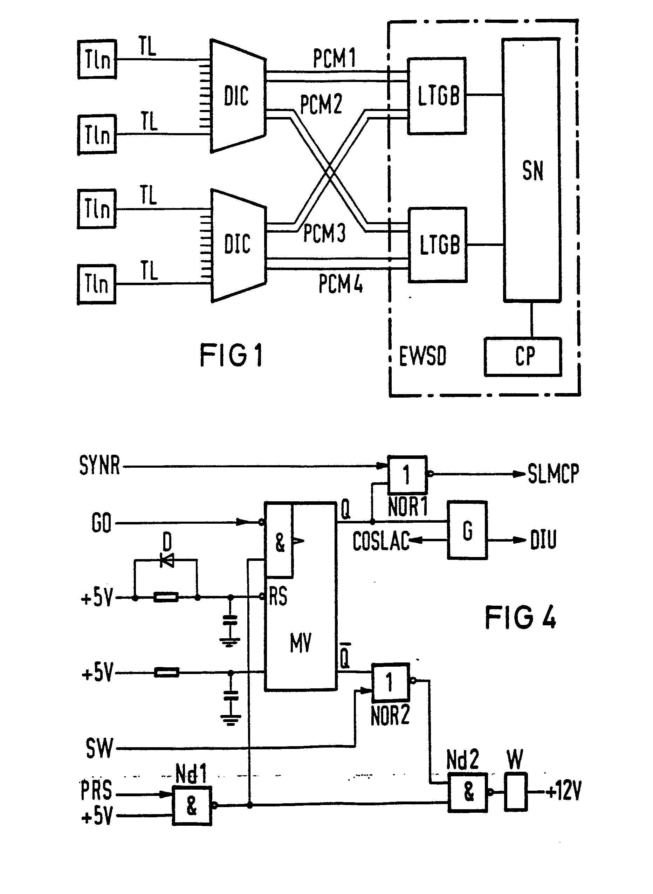

Bei der Anordnung gemäß Fig. 1 sind zwei digitale Konzentratoren DIC vorhanden, an die jeweils eine Vielzahl von Teilnehmerstationen Tln über Teilnehmeranschlußleitungen TL angeschlossen sind.

Jeder der digitalen Konzentratoren ist über ein Paar von vierdrähtigen PCM-Leitungen PCM1 und PCM2 bzw. PCM3 und PCM4 an eine Vermittlungsstelle EWSD angeschlossen.

Von dieser Vermittlungsstelle sind hier lediglich Anschlußbaugruppen LTGB für die PCM-Leitungen, ein Koppelnetzwerk SN sowie ein Zentralsteuerwerk CP angedeutet.

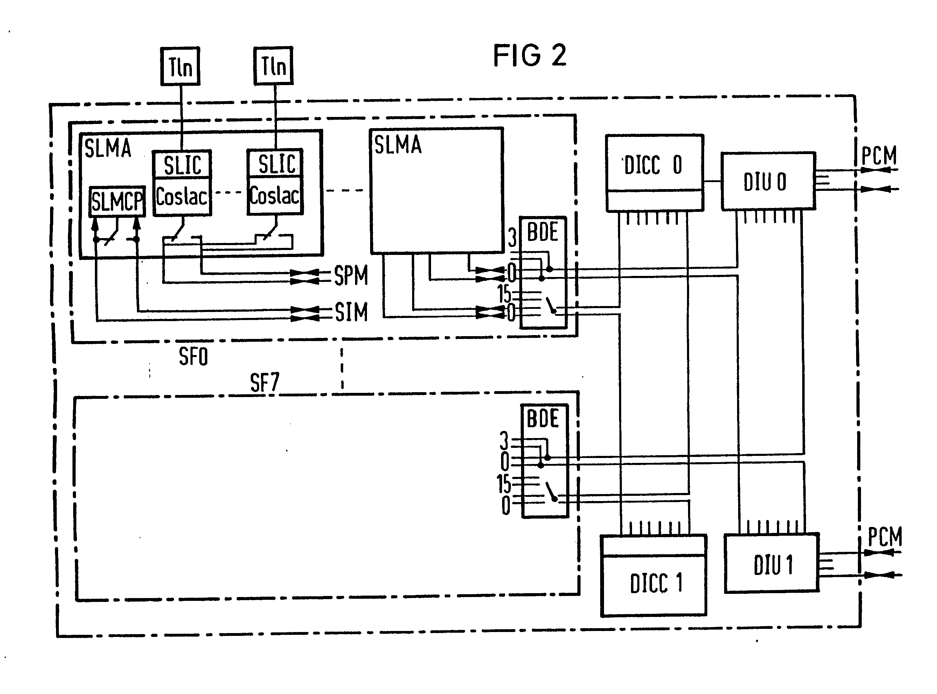

Wie die Fig. 2 zeigt, sind Bestandteil eines digitalen Konzentrators DIC gemäß Fig. 1 unter anderem Teilnehmeranschlußbaugruppen SLMA für den Anschluß von jeweils acht Teilnehmerstaionen, von denen beispielsweise jeweils 15 zu einer Baueinheit SF0 bis SF7 zusammengefaßt sind. Die wesentlichsten Bestandteile der Teilnehmerschlußbaugruppen sind je Teilnehmer Unterbaugruppen SLIC und COSLAC, sowie ein sämtlichen Unterbaugruppen gemeinsamer Steuerrechner SLMCP.

Die Teilnehmeranschlußbaugruppen SLMA bzw. deren Bestandteile sind diejenigen Teile des digitalen Konzentrators DIC, die, wie noch erläutert werden wird, durch die erfindungsgemäße Überwachungsschaltung auf ordnungsgemäßen Betrieb überwacht werden sollen.

Weitere Bestandteile des in Fig. 2 dargestellten digitalen Konzentrators DIC sind ein Paar den Baueinheiten SF0 bis SF7 gemeinsamer Steuereinheiten DICC0 und DICC1, sowie ein Paar von Schnittstelleneinheiten DIU0 und DIU1, die eine Verbindung zu den im Zusammenhang mit Fig. 1 erwähnten zur Vermittlungsstelle führenden Zeitmultiplexleitungen PCM herstellen.

Die Steuerrechner SLMCP der Teilnehmeranschlußbaugruppen SLMA sind über eine Signalmultiplexleitung SIM und über einen Verteiler BDE mit den erwähnten Steuerungen DICC0 und DICC1 verbindbar, in entsprechender Weise bestehen Verbindungen zwischen den Unterbaugruppen COSLAC der Teilnehmeranschlußbaugruppen und den erwähnten Schnittstelleneinheiten DIU0 und DIU1 über Sprachmultiplexleitungen SPM und den erwähnten Verteiler BDE.

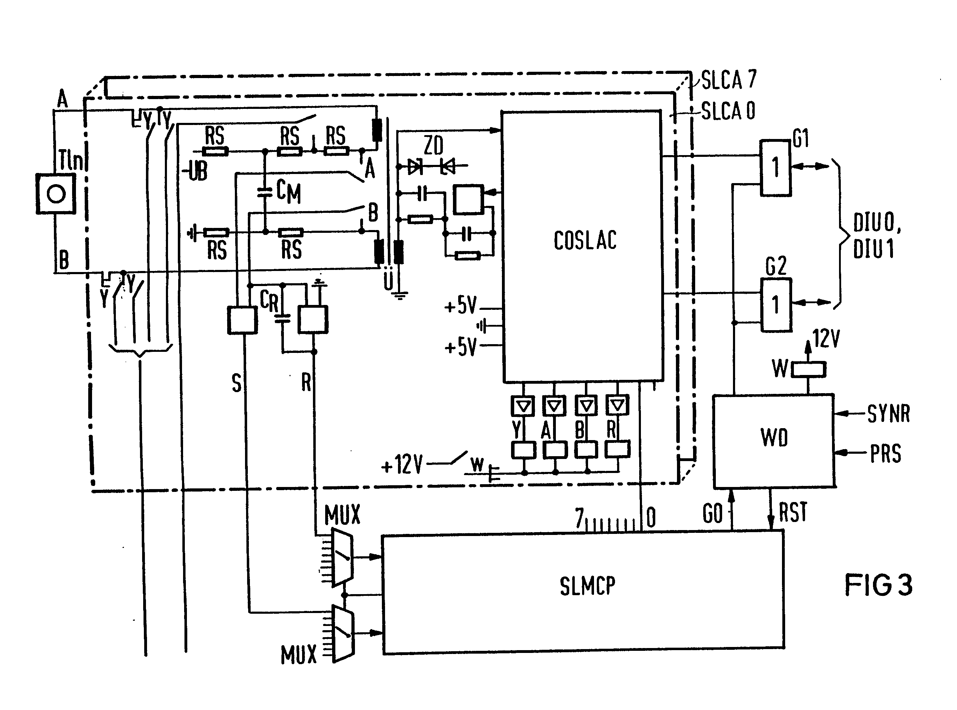

In Fig. 3 sind die teilnehmerindividuellen Bestandteile der Teilnehmeranschlußbaugruppe SLMA gem. Fig. 2 für einen Teilnehmer mehr ins Einzelne gehend dargestellt. Dies gilt insbesondere für die Unterbaugruppe SLIC gem. Fig. 2. Eine solche Unterbaugruppe SLIC enthält, wie die Fig. 3 zeigt, im wesentlichen ein aus den Widerständen RS und einem Kondensator CM gebildetes Speisenetzwerk, bei dem einzelne der Speisewiderstände durch Kontakte von Relais A und B überbrückbar sind, wodurch eine Umschaltung von hochohmiger Speisung auf niederohmige Speisung möglich ist.

Die Figur zeigt ferner den Kontakt eines Relais R, über den der Rufstrom eingespeist wird, sowie Kontakte eines Relais Y, die zu Testzwecken betätigt werden. Weiterer Bestandteil dieses Schaltungsteils sind ein Übertrager Ü sowie eine Schutzschaltung, die hier durch das Zenerdiodenpaar ZD angedeutet ist.

Wie aus Fig. 3 ersichtlich, erfolgt die Ansteuerung der erwähnten Relais Y, A, B und R von der Untereinheit COSLAC aus. Über Multiplexer MUX sind die leitungsindividuellen Teile der Teilnehmeranschlußbaugruppe mit den gruppenindividuellen Steuerrechner SLMCP verbindbar.

In der Fig. 3 ist ferner die den Gegenstand der Erfindung darstellende Überwachungsschaltung WD dargestellt, zwischen der und dem Steuerrechner SLMCP Signale GO und RST ausgetauscht werden, auf die nachfolgend noch eingegangen wird. Der Darstellung entnimmt man ferner, daß die Überwachungsschaltung Gatterschaltungen G1 und G2 beeinflußt, über die die Teilnehmeranschlußbaugruppen des digitalen Konzentrators mit den Schnittstelleneinheiten DIU0 und DIU1 und damit mit den Zeitmultiplexleitungen PCM in Verbindung stehen.

Die Überwachungsschaltung WD steuert ferner ein Relais W, mit dessen Hilfe die Betriebsspannung an die Relais Y, A, B und R angelegt bzw. abgetrennt werden kann.

Wesentlicher Bestandteil der in Fig 4 dargestellten erfindungsgemäßen Überwachungsschaltung ist eine retriggerbare monostabile Kippstufe MV.

Als Triggersignal wird dieser monostabilen Kippstufe das im Zusammenhang mit der Fig.3 erwähnte vom Steuerrechner SLMCP der Teilnehmeranschlußbaugruppe abgegebene Signal GO zugeführt, das bei ordnungsgemäßen Betrieb des Steuerrechners periodisch wiederkehrend auftritt. Dieses Signal GO kann jedoch nur dann wirksam werden, wenn vom Ausgang eines NAND-Gliedes Nd1 aus ein entsprechendes Signal an die Kippstufe geliefert wird, das mit dem OG-Signal gemäß einer UND-Verknüpfung verknüpft wird. Das NAND Glied Nd1 gibt dann ein Ausgangssignal ab, wenn der nicht auf Festpotential liegende Eingang nicht von einem Signal PRS beaufschlagt wird. Dieses Signal PRS tritt dann auf, wenn die Versorgungsspannung für die aktiven Elemente der Teilnehmeranschlußbaugruppe, die beispielsweise +5V/-5V beträgt, nicht den vorgegebenen Pegel erreicht bzw. unter diesen abfällt oder ganz ausfällt.

Solange das GO-Signal wirksam ist verbleibt die monostabile Kippstufe MV in ihrem Instabilen Zustand. Fällt das GO-Signal dagegen aus oder kann es wegen des Auftretens des Signals PRS nicht mehr wirksam werden, dann fällt die monostabile Kippstufe MV in ihren stabilen Zustand zurück. In diesem Zustand liefert sie an ihren Q-Ausgang ein Signal, das einerseits die schon im Zusammenhang mit Fig. 3 erwähnte Gatterschaltung G sperrt und damit die Sprachsignalverbindung zwischen der Teilnehmeranschlußbaugruppe und der Schnittstellenschaltung DIU1 und DIU2 bzw. mit der PCM-Leitung unterbricht. Das genannte Ausgangssignal am Q-Ausgang der monostabilen Kippstufe MV wird außerdem dem einen Eingang eines NOR-Verknüpfungsgliedes NOR1 zugeführt, an dessen anderen Eingang ein Taktsignal SYNR gelangt. Das Ausgangssignal dieses NOR-Gliedes, dessen Verknüpfungsbedingung in dem diskutierten stabilen Schaltzustand der monostabilen Kippstufe erfüllt ist, wird dem Steuerrechner SLMCP als Rücksetzsignal zugeführt.

Wenn die monostabile Kippstufe MV in ihren stabilen Zustand übergegangen ist, wird an ihrem Q̄-Ausgang ein Signal abgegeben, das über ein NOR-Glied NOR2 und über ein NAND-Glied Nd2 an ein Relais W weitergegeben wird, bei dessen Betätigung, wie anhand der Fig. 3 erläutert, die Betriebsspannung von den Relais Y, A, B und R abgetrennt wird.

Diese Reaktion ergibt sich auch dann, wenn das Signal PRS am Eingang des NAND-Gliedes Nd1 auftritt und, da der Ausgang dieses NAND-Gliedes mit einem Eingang des NAND-Gliedes Nd2 verbunden ist, ebenfalls ein Relais-Betätigungssignal auslöst.

Das Relais W spricht ferner an, wenn vom Steuerrechner SLMCP aus ein entsprechendes Sperrsignal SW geliefert wird, das an den anderen Eingang des NOR-Gliedes NOR2 gelangt und zu derselben Reaktion führt wie das Ausgangssignal am Q̄-Ausgang der monostabilen Kippstufe MV in deren stabilen Zustand. Das Sperrsignal SW wird immer nach der Inbetriebnahme der Teilnehmeranschlußbaugruppe über eine bestimmte Zeitspanne hinweg geliefert, da während eines solchen Einschaltbetriebs der Steuerrechner zwar möglicherweise schon eine periodische Folge von GO-Signalen abgibt, die monostabile Kippstufe also in ihrem instabilen Zustand verbleibt, die Unterbaugruppe COSLAC aber noch unzutreffende Relaisansteuersignale liefert, die zu einem nichtzulässigen gleichzeitigen Ansprechen des A- und des R-Relais führen könnten.

Ebenfalls im Hinblick auf den Einschaltbetrieb, beispielsweise beim Einstecken der als Steckbaugruppe ausgebildeten Teilnehmeranschlußbaugruppe, liegt am Rücksetzeingang RS der monostabilen Kippstufe ein aus dem Widerstand R und dem Kondensator C gebildetes Zeitglied, das wenn es beim Einstecken von der Betriebsspannung von beispielsweise 5V beaufschlagt wird, nach einer Verzögerungszeit von beispielsweise 200ms einen Rücksetzimpuls liefert, durch den die monostabile Kippstufe in den stabilen Zustand versetzt wird mit all den obenstehend beschriebenen Konsequenzen für den Steuerrechner, die Anschaltung an die Sprachzeitmultiplexleitung und die Abtrennung der Relais von ihrer Betriebsspannung.

Sollte es beim Stecken der Teilnehmeranschlußbaugruppe und damit beim Anlegen der 5V-Spannung an die monostabile Kippstufe zu Prellungen kommen, dann sorgt eine dem Widerstand R parallelgeschaltete und durch die angelegte Betriebsspannung in Sperrichtung beaufschlagte Diode D dafür, daß das Rücksetzen der monostabilen Kippstupe nach wesentlich kürzere Zeit als der Verzögerungszeit des Zeitgliedes erfolgt.

Patentansprüche

1. Schaltungsanordnung zur Überwachung und Sicherstellung des ordnungsgemäßen Betriebs einer Teilnehmeranschlußbaugruppe einer digitalen Zeitmultiplex-Fernsprechvermittlungsstelle, die u.a. einen allen Teilnehmerschaltungen der Baugruppe gemeinsamen Steuerrechner umfaßt und die insbesondere Bestandteil eines digitalen Konzentrators des Zeitmultiplex-Fernsprechvermittlungssystems ist, gekennzeichnet durch eine retriggerbare monostabile Kippstufe (MV), die durch ein vom Steuerrechner (SLMCP) bei ordnungsgemäßen Betrieb abgegebenes periodisches Signal (GO) getriggert wird, sofern nicht ein bei nichteingehaltenem vorgegebenen Pegel der Versorgungsspannung für aktive Bauteile der Teilnehmeranschlußbaugruppe auftretendes Unterbrechungssignal (PRS) vorliegt, und deren bei Rückkehr in den stabilen Zustand abgegebenes wenigstens eines Ausgangssignal dazu herangezogen wird, jeweils zum Zeitpunkt des Auftretens eines periodischen Taktsignals (SYNR) ein Rücksetzen des Steuerrechners, ein Sperren der Übertragungswege für Sprachsignale zwischen Teilnehmeranschlußbaugruppe und Vermittlungsstelle, sowie ein Abtrennen der Betriebsspannung (+12V) für zur Teilnehmerschaltung gehörende Relais (Y,A,B,R) zu bewirken.

2. Schaltungsanordnung nach Anspruch 1, dadurch gekennzeichnet, daß eine monostabile Kippstufe (MV) mit Rücksetzeingang verwendet wird, der über ein Zeitglied (RC) durch den beim Anlegen der Versorgungsspannung an die Teilnehmeranschlußbaugruppe entstehenden Spannungssprung als Rückstellsignal beaufschlagt wird.

3. Schaltungsanordnung nach Anspruch 2, dadurch gekennzeichnet, daß das Zeitglied ein RC-Glied (RC) ist, und daß der Widerstand (R) des RC-Gliedes durch eine durch die Betriebsspannung (+5V) in Sperrichtung beaufschlagte Diode (D) überbrückt ist.

**Revendications**

1. Montage pour contrôler et assurer le fonctionnement correct d'un module de raccordement d'abonnés d'un central téléphonique numérique à multiplexage temporel, qui comporte notamment un calculateur de commande commun à tous les circuits d'abonnés du module et fait notamment partie d'un concentrateur numérique du système de commutation téléphonique à multiplexage temporel, caractérisé par un étage à bascule monostable redéclenchable (MV), qui est déclenché par un signal périodique (GO) délivré par le calculateur de commande (SLMCP) lors du fonctionnement correct, dans la mesure où un signal d'interruption (PRS), qui apparaît dans le cas où un niveau prédéterminé de la tension d'alimentation pour des composants actifs du module de raccordement d'abonnés n'est pas respecté, et dont au moins un signal de sortie, délivré lors du retour à l'état stable, est utilisé pour réaliser, respectivement lors de l'apparition d'un signal de cadence périodique (SYNR), un retour à zéro du calculateur de commande, un blocage des voies de transmission pour des signaux vocaux entre le module de raccordement d'abonnés et le central, ainsi qu'une interruption de la tension de service (+12 V) pour des relais (Y,A,B,R) faisant partie du circuit d'abonné.

2. Montage suivant la revendication 1, caractérisé par le fait qu'on utilise un étage à bascule monostable (MV) possédant une entrée de remise à l'état initial, qui est chargée, par l'intermédiaire d'un circuit de temporisation (RC), par le saut de tension qui apparaît lors de l'application de la tension d'alimentation au module de raccordement d'abonnés, en tant que signal de remise à l'état initial.

3. Montage suivant la revendication 2, caractérisé par le fait que le circuit de temporisation est un circuit RC (RC), et que la résistance (R) du circuit RC est shuntée par une diode (D) chargée en inverse par la tension de service (+5 V).

**Claims**

1. Circuit arrangement for monitoring and ensuring the correct operation of a subscriber line module of a digital time-division multiplex telephone exchange, which comprises, inter alia, a control computer shared by all subscriber circuits of the module and which is preferably a component part of a digital concentrator of the time-division multiplex telephone exchange system, characterized by a retriggerable monostable multivibrator (MV) which is triggered by a periodic signal (GO) output by the control processor (SLMCP) in the case of correct operation, provided that an interrupt signal (PRS) that occurs when a given level of the supply voltage for active components of the subscriber line module is not maintained is not present, and at least one output signal thereof, output upon return to the stable state, is used, in each case at the time of occurrence of a periodic clock signal (SYNR), to effect a resetting of the control processor, a blocking of the transmission paths for voice signals between subscriber line module and exchange, and also a disconnection of the operating voltage (+12V) for relays (Y,A,B,R) belonging to the subscriber circuit.

2. Circuit arrangement according to Claim 1, characterized in that a monostable multivibrator (MV) with reset input is used, which is driven, as reset signal, via a timing element (RC) by the voltage jump occurring when the supply voltage is applied to the subscriber line module.

3. Circuit arrangement according to Claim 2, characterized in that the timing element is an RC element (RC), and in that the resistor (R) of the RC element is bridged by a diode (D) caused to move in blocking direction by the operating voltage (+5V).

FIG 1

FIG 4

1

FIG 2

FIG 3

DIU0, DIU1

G1
G2

SYNR
PRS

WD

12V
W

RST
GO

SLCA 7
SLCA 0

COSLAC

ZD

+5V
+5V

Y  A  B  R

+12V — W

SLMCP

0
7

MUX
MUX

RS  RS
RS  RS
CM
RS
RS

A
B
U

RS  RS
-UB

CR
R
S

Tln
A
B